# FASCICULE DE BREVET EUROPEEN

(11) **EP 3 263 977 B1**
(45) Date de publication et mention de la délivrance du brevet: **10.11.2021**
(21) Numéro de dépôt: 17176697.5
(22) Date de dépôt: 19.06.2017
(51) Int. Cl.: F21S 41/29, F21S 41/63, B60Q 1/068, B60Q 1/20, F21S 41/143

(54) **DISPOSITIF LUMINEUX DE VEHICULE AVEC UN ELEMENT OPTIQUE PLAQUE PAR UNE ARMATURE FLEXIBLE**
LEUCHTVORRICHTUNG FÜR FAHRZEUGE MIT EINEM OPTISCHEN ELEMENT, DAS MIT EINER FLEXIBLEN BEWEHRUNG VERKLEMMT IST
LIGHTING DEVICE OF A VEHICLE WITH AN OPTICAL ELEMENT CLAMPED BY A FLEXIBLE FRAME

(30) Priorité: 28.06.2016 FR 1656010
(43) Date de publication de la demande: 03.01.2018
(73) Titulaire: Valeo Vision Belgique, 7822 Meslin l'Evêque (BE)
(72) Inventeur: SACCHET, Dirkie, 7822 MESLIN L'EVEQUE (BE); DEBERT, Florestan, 7822 MESLIN L'EVEQUE (BE); DINANT, Franck, 7822 MESLIN L'EVEQUE (BE)
(74) Mandataire: Valeo Visibility

(56) Documents cités:
- EP-A1- 2 998 644
- EP-A2- 2 508 795
- WO-A1-2014/012878
- FR-A1- 3 026 462

## Description

La présente invention concerne un dispositif lumineux, notamment de véhicule automobile. Plus particulièrement, la présente invention concerne un dispositif d'éclairage de la route, notamment un feu antibrouillard.

Dans les dispositifs lumineux de véhicule, il est important que le faisceau lumineux respecte certaines caractéristiques spatiales de répartition de l'intensité lumineuse. Par exemple, certains projecteurs doivent pouvoir réaliser un faisceau lumineux délimité par une ligne de coupure à un certain niveau au-dessus de la chaussée.

Pour cela, il est requis un positionnement précis de l'élément optique déviant les rayons lumineux émis par la source lumineuse de ces dispositifs, de manière à former le faisceau lumineux désiré. L'élément optique est encore appelé déviateur optique.

Par exemple dans différents projecteurs connus, l'élément optique et la source lumineuse sont fixés directement ou indirectement au boîtier. C'est notamment le cas dans les feux antibrouillard où la lampe est fixée à l'arrière du boîtier et où le réflecteur est fixé au boîtier via un berceau.

De tels projecteurs présentent donc plusieurs éléments en contact entre l'élément optique et la source lumineuse dont ils dévient les rayons. Ces différents contacts sont autant de tolérances à prendre en compte lors de la conception du projecteur. Plus il y en a, plus la réalisation de ces projecteurs sera délicate. Le document FR3026462 décrit un dispositif lumineux connu.

Le problème technique que vise à résoudre l'invention est donc de simplifier la réalisation de dispositifs lumineux de véhicule, au regard des tolérances entre la source lumineuse et l'élément optique qui dévie ses rayons.

A cet effet, un premier objet de l'invention est un dispositif lumineux de véhicule automobile destiné à comprendre une source lumineuse, ledit dispositif lumineux comprenant :
- un déviateur optique agencé pour dévier les rayons lumineux émis par la source lumineuse,
- au moins un élément d'appui,
- un élément de plaquage comprenant une armature et au moins une portion de contact portée par l'armature, l'armature entourant au moins partiellement le déviateur optique, cette portion de contact étant en appui contre le déviateur optique,
le déviateur optique, l'élément d'appui et cet élément de plaquage étant agencés de manière à ce que le déviateur optique soit au moins partiellement enserré entre cet élément d'appui et cette portion de contact, et à ce que, selon une direction passant par cette portion de contact, dite direction de flexion, cette portion de contact soit rigide et l'armature soit déformable, de préférence élastiquement déformable.

Dans la présente invention, on entend par déformable que l'armature se déforme sans rupture lorsqu'elle subit une force de contrainte selon la direction de flexion. Elle est donc flexible. La forme et la matière de l'armature sont définies de sorte à rester dans un domaine inférieur ou égal à 200% de la limite d'élasticité de la pièce.

Selon une première variante la matière de l'armature ne contient pas de fibres, et le domaine de déformation peut aller jusqu'à 200% de la limite d'élasticité. De préférence la déformation reste dans le domaine d'élasticité, c'est-à-dire que la déformation peut aller jusqu'à 100% de la limite d'élasticité et que l'armature reprend sa forme initiale lorsque la contrainte n'est plus exercée.

Selon une deuxième variante la matière de l'armature contient des fibres, et le domaine de déformation sera restreint au domaine élastique.

Par opposition, la portion de contact est dite rigide car elle ne subit pas de déformation lorsqu'elle est soumise à la même force de contrainte que l'armature déformable.

Ainsi, les défauts de tolérance entre le déviateur optique, l'élément d'appui et l'élément de plaquage, sont absorbés par l'armature de l'élément de plaquage, notamment des tolérances par rapport au boitier.

Cette direction de flexion peut notamment être dirigée vers l'avant du dispositif lumineux, notamment perpendiculairement à un axe de pivotement du déviateur optique.

Selon une réalisation de l'invention, l'élément d'appui est une vis de réglage. Cela peut permettre, par exemple, d'absorber les défauts de tolérance entre le déviateur optique et la vis de réglage et/ou d'éviter un effort trop grand sur cette vis lors d'un mouvement du déviateur optique.

Selon une réalisation de l'invention, l'élément d'appui est un support du déviateur optique. Cela permet d'absorber les défauts de tolérance entre le déviateur optique, son support et l'élément de plaquage.

Ces deux réalisations précédentes peuvent être combinées.

Par exemple, selon une réalisation de l'invention, le dispositif lumineux comprend deux éléments d'appui, l'un étant une vis de réglage et l'autre le support du déviateur optique. Dans cette réalisation, l'armature enserre ainsi le déviateur optique entre d'une part le support de ce dernier et d'autre part la vis de réglage.

L'invention présente les caractéristiques suivantes :
- l'élément de plaquage est un masque placé en avant de l'élément d'appui selon la direction d'émission du faisceau lumineux par le dispositif lumineux ; un tel masque permet de cacher les câbles, le fond du boîtier ou autres éléments de formes purement fonctionnelles à la vue d'un observateur extérieur au dispositif lumineux ; en utilisant cette pièce comme élément de plaquage, il est inutile d'avoir une pièce supplémentaire, ce qui représente un gain de poids et de matière ;
- l'armature est un enjoliveur du masque, l'enjoliveur étant visible depuis l'extérieur dudit dispositif lumineux et présentant une ouverture centrale à travers laquelle passe les rayons lumineux émis par la source lumineuse, après ou avant déviation par le déviateur optique ; le masque est ainsi une pièce simple à réaliser. L'invention et/ou les réalisations vues ci-dessus, peuvent optionnellement présenter une ou plusieurs des caractéristiques suivantes :
- l'armature et la ou les portions de contact sont venues de matière en une seule pièce ; cela simplifie le montage du dispositif ;
- l'élément d'appui ou l'un des éléments d'appui est une vis de réglage s'étendant selon un axe longitudinal et agencée de manière à entrainer le pivotement du déviateur optique autour d'un axe de pivotement ; la vis de réglage permet ainsi d'ajuster la position du déviateur optique ; en cas de blocage, la flexibilité de l'armature permet de limiter, voire d'éviter, les dégradations sur la partie dentée ou sur la vis de réglage ;
- le déviateur optique comprend une partie de déviation destinée à dévier des rayons lumineux émis par la source lumineuse et une partie dentée coopérant avec une portion filetée de la vis de réglage ; c'est un moyen simple d'assurer la coopération de la vis de réglage et du déviateur optique ;
- le déviateur optique et la vis de réglage sont agencés de manière à ce que la vis de réglage soit libre en rotation autour de son axe longitudinal et que la rotation de la vis de réglage dans un sens ou dans l'autre entraine le pivotement de la partie de déviation autour de l'axe de pivotement, notamment horizontal et/ou transversal ; c'est un moyen simple et direct d'entrainer le pivotement ;
- selon l'alinéa ci-dessus, la vis de réglage peut également être bloquée en translation ; elle fonctionne ainsi selon le principe d'une vis sans fin ; cela permet un actionnement plus compact comparé à des vis se déplaçant en translation ;
- la partie dentée est un secteur de roue dentée ; c'est une forme simple de réalisation ;
- le secteur de roue dentée est centré sur un axe de pivotement du déviateur optique ; cela permet une rotation avec des efforts moindres sur la vis de réglage ;
- le secteur de roue dentée forme un bras le secteur de roue dentée forme un bras aligné avec la portion filetée et la portion de contact correspondante ; l'effort sur le déviateur optique est ainsi transmis directement à l'armature ;
- le déviateur optique et la vis de réglage sont agencés de manière à permettre le pivotement du déviateur optique entre deux positions extrêmes, le déviateur optique venant en butée sur une butée de débrayage au moins dans l'une de ces positions extrêmes ; cela permet de limiter la course du déviateur optique ; cette butée de débrayage peut être formée sur le support du déviateur optique ou sur le boitier ;
- le déviateur optique et la vis de réglage sont agencés de manière à ce que lorsque le déviateur optique appuie contre la butée de débrayage, la portion filetée exerce une poussée sur la partie dentée de sorte que le déviateur optique se déplace selon la direction de flexion et l'armature, entrainant et/ou augmentant le fléchissement de l'armature; cela permet d'améliorer l'absorption de l'effort correspondant, et donc d'éviter une usure, voire une dégradation, de la vis de réglage ou du déviateur optique ;
- l'armature est agencée de manière à pouvoir fléchir jusqu'à ce que la partie dentée débraye de la vis de réglage ; ainsi il n'y a pas de limite de l'effort exercé sur le déviateur optique et sur la vis de réglage, puisqu'au-delà d'un certain seuil, la partie dentée débraye ; du fait de l'élasticité de l'armature, une force de rappel est généré ; ainsi aussitôt que la partie dentée a débrayé, elle est rappelée vers la vis de réglage pour s'engrener à nouveau avec celle-ci ;
- l'armature et la ou les portions de contact sont montées en interférence de manière à ce que l'armature soit en précontrainte élastique selon la direction de flexion ; cela permet d'assurer un plaquage contre l'élément d'appui ; dans le cas où ce dernier est une vis de réglage, cela permet de maintenir la partie dentée et la vis de réglage engrenées et/ou de conférer une certaine résistance avant le débrayage de la vis de réglage; dans le cas où l'élément d'appui est le support du déviateur optique, cela améliore le maintien en position correcte de ce dernier ;

- l'élément d'appui ou l'un des éléments d'appui est un support du déviateur optique, ce dernier étant destiné à supporter la source lumineuse ; la chaine de cote est ainsi diminuée ; notamment, la déviateur optique est en appui direct contre le support de source lumineuse ;
- la partie de déviation et la ou les parties du déviateur optique en appui direct contre le support de la source lumineuse sont venus de matière en une seule pièce ; la chaîne de cote est davantage améliorée ;
- le support du déviateur optique est un dissipateur thermique, notamment un radiateur ; on améliore la compacité en permettant l'évacuation de la chaleur générée par la source lumineuse ;
- le dissipateur thermique est agencé pour être en conduction thermique avec la source lumineuse ; on améliore ainsi l'évacuation de la chaleur générée par la source lumineuse, notamment lorsque cette dernière comprend un élément semi-conducteur photoémissif ;
- le déviateur optique comprend une partie de déviation des rayons lumineux émis par la source lumineuse et une première partie d'articulation mobile articulée entre une première partie d'articulation fixe et une deuxième partie d'articulation fixe, une première portion de contact formant la deuxième partie d'articulation fixe et le support du déviateur optique comprenant la première partie d'articulation fixe ; le déviateur optique est ainsi articulé et mobile entre le support de source lumineuse et l'armature avec un nombre de pièces limitées ; cela permet d'ajuster la position du faisceau lumineux ; l'armature permet de maintenir le déviateur optique plaqué contre le support de la source lumineuse, tout en permettant l'articulation du déviateur optique, y compris en cas de contact direct entre d'un côté la portion de contact et de l'autre le support de la source lumineuse ;
- le déviateur optique comprend une partie de déviation des rayons lumineux émis par la source lumineuse et une deuxième partie d'articulation mobile articulée entre une troisième partie d'articulation fixe et une quatrième partie d'articulation fixe, une deuxième portion de contact formant la quatrième partie d'articulation fixe et le support du déviateur optique comprenant la troisième partie d'articulation fixe, la première et la deuxième parties d'articulation mobile étant réparties de part et d'autre de la partie de déviation optique selon un axe de pivotement du déviateur optique ; on renforce ainsi le support du déviateur optique ; l'armature a dans ce cas au moins deux portions de contact telles qu'évoquées précédemment ;
- les première et deuxième parties d'articulation fixes sont décalées selon une direction parallèle à l'axe de pivotement du déviateur optique ;
- le déviateur optique présente une partie dentée coopérant avec une portion filetée d'une vis de réglage, notamment celle précédemment évoquée, cette partie dentée étant agencée entre la première partie d'articulation fixe et la deuxième partie d'articulation fixe ; cela renforce le maintien en position de la partie dentée ;
- les troisième et quatrième parties d'articulation fixes sont décalées transversalement selon l'axe pivot ; cela renforce la stabilité de l'ensemble ;
- l'armature comprend des moyens de fixation à emboitement élastique emboités dans le dispositif lumineux et agencés de manière à maintenir l'armature plaquée contre le déviateur optique ; on peut ainsi fixer simplement l'armature contre le déviateur optique par simple plaquage ;
- les moyens de fixation à emboitement élastique sont agencés de manière à s'emboiter selon la direction de flexion ; cela permet d'améliorer le plaquage selon l'option de l'alinéa précédent ;
- l'élément d'appui ou l'un des éléments d'appui est un support du déviateur optique, le support du déviateur optique comprenant des moyens complémentaires d'emboitement avec lesquels les moyens de fixation à emboitement élastique sont emboités ; on simplifie le montage ensemble de l'élément de plaquage, du déviateur optique et de son support ;
- au moins l'armature est en polycarbonate ; cela permet une bonne flexibilité de celle-ci ;
- le dispositif lumineux comprend la source lumineuse ; dans ce cas le dispositif lumineux est prêt à émettre un faisceau lumineux dès qu'il sera alimenté en électricité ;
- la source lumineuse comprend un élément photoémetteur, notamment la source lumineuse est une diode électroluminescente, encore appelée LED ; la présente invention est particulièrement utile dans le cadre d'un dispositif lumineux avec une telle source lumineuse ; en effet comme l'élément photoémetteur est de taille très réduite comparée à des filaments de lampes classiques, les jeux et les imprécisions ont plus d'impact ;
- le déviateur optique est en lien direct d'un côté contre l'élément de plaquage et/ou de l'autre côté contre l'élément d'appui ;
- le déviateur optique est une lentille ; notamment une lentille agencée de manière à réaliser par projection une image de la source lumineuse ;
- le dispositif lumineux comprend un boîtier et une glace de fermeture fermant une ouverture avant du boîtier et transparente pour laisser passer les rayons lumineux émis par ledit dispositif lumineux ;
- la vis de réglage est montée fixe en translation et libre en rotation dans le boitier ;
- le support du déviateur optique est fixé dans et au boitier ; notamment, il peut être fixé directement aux parois de boitier, ce qui simplifie le montage du dispositif ;
- le boîtier présente une portion cylindrique à l'intérieur de laquelle le ou au moins l'un des éléments d'appui, le déviateur optique, et l'élément de plaquage, s'empilent selon cet ordre, selon une direction parallèle à l'axe de la portion cylindrique ; on a ainsi un montage du dispositif lumineux simplifié, d'autant plus intéressant lorsque le dispositif lumineux est un feu antibrouillard, notamment destiné à être monté dans le bouclier avant du véhicule ;
- le déviateur optique est agencé de manière à dévier les rayons lumineux de manière à former un faisceau d'éclairage présentant une ligne de coupure ; la précision du dispositif selon l'invention est d'autant plus utile dans ce cas, car la ligne de coupure doit être positionnée précisément pour ne pas éblouir les conducteurs des véhicules venant en sens inverse ou suivis par un véhicule équipé d'un dispositif lumineux selon l'invention ;
- le dispositif lumineux est un feu antibrouillard, le déviateur optique étant agencé de manière à dévier les rayons lumineux de manière à former un faisceau antibrouillard présentant une ligne de coupure horizontale.

Un autre objet de l'invention est un véhicule comprenant un dispositif lumineux selon l'invention.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective qui représente de façon éclatée un exemple de dispositif lumineux selon l'invention ;
- la figure 2 est une vue de face du dispositif lumineux de la figure 1, illustré de façon assemblé ;
- la figure 3 est une coupe du dispositif lumineux de la figure 2, selon un plan perpendiculaire à l'axe 63 et comprenant l'axe 3;
- la figure 4 est une vue en perspective de l'élément de plaquage du dispositif lumineux des figures précédentes ;
- la figure 5 est une vue de côté dispositif lumineux de la figure 2, sans la glace de fermeture, ni le boitier ;
- la figure 6 est une coupe du dispositif lumineux de la figure 2, selon un plan perpendiculaire à l'axe 3 et comprenant l'axe 63, mais sans la glace de fermeture ;
- la figure 7 est une vue de côté du dispositif lumineux de la figure 2, sans le boitier, ni la glace de fermeture, du côté opposé à celui de la figure 5 ;
- la figure 8 représente schématiquement un principe de l'invention.

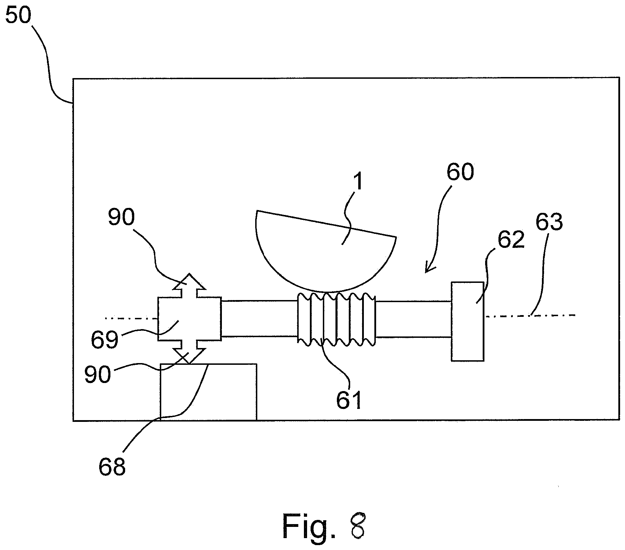

La figure 8 illustre une vis de réglage 60 et un dispositif selon l'invention dans son principe général.

Ce dispositif comprend ici un boîtier 50 à l'intérieur duquel est enfermée une pièce réglable 1. L'orientation de cette pièce a besoin pour ce dispositif d'être réglée. Pour cela, une vis de réglage 60 coopère avec cette pièce réglable 1 de manière à modifier son orientation.

La vis de réglage 60 s'étend selon un axe longitudinal 63 autour duquel elle est entraînée en rotation, lors de la mise en œuvre d'un moyen d'actionnement 62.

Cette vis de réglage 60 est notamment agencée de manière à s'engrener avec la pièce réglable 1. La vis de réglage 60 comprend pour cela une portion filetée 61, qui s'engrène dans des formes complémentaires disposées sur la pièce réglable 1, ces formes complémentaires n'étant pas représentées en figure 8.

La vis de réglage 60 comprend également une portion porteuse 69 qui est située d'un côté de la portion filetée 61 selon l'axe longitudinal 63 de la vis, par exemple à l'une des extrémités de la vis de réglage 60 qui est opposée à l'extrémité portant le moyen d'actionnement 62. Cette portion porteuse 69 est pourvue de moyens élastiques 90 aptes à être comprimés selon une direction transversale à l'axe longitudinal 63 de la vis. En figure 8, cette direction transversale est dans le plan de la figure et perpendiculaire à l'axe longitudinal 63.

Le dispositif comprend une paroi de coopération 68 fixée directement ou indirectement au boîtier 50. L'un des moyens élastiques 90, en figure 8 celui du bas, est agencé entre la portion porteuse 69 et cette paroi de coopération 68.

Tel que les éléments sont agencés dans ce dispositif, la pièce réglable 1, la paroi de coopération 68 et les moyens élastiques 90 sont agencés de manière à ce que le ou les moyens élastiques 90 en contact avec cette paroi de coopération 68, ici celui du bas, soient précontraints de manière à exercer une force de rappel de cette portion filetée vers la pièce réglable 1.

Dans l'exemple illustré, le moyen élastique 90 est comprimé contre la portion de coopération 68 et exerce la force de rappel sur la portion porteuse 69, soit vers le haut sur cette figure 8, entraînant le rappel de la portion filetée 61 contre la pièce réglable 1.

Selon une variante non représentée, les moyens élastiques 90 peuvent être portés par la paroi de coopération au lieu de la portion porteuse 69. Ils se compriment alors contre la portion porteuse 69, et entraînant le rappel de la portion filetée 61 contre la pièce réglable 1.

Ce principe est applicable à différents dispositifs comprenant au moins une pièce réglable et à différentes vis de réglage adaptées à un tel dispositif.

En particulier, ce principe peut être appliqué à un dispositif lumineux de véhicule, notamment à un feu antibrouillard, comme il va être exposé ci-après.

La pièce réglable peut être un déviateur optique, tel qu'une lentille, un réflecteur, une combinaison de lentilles, une combinaison de réflecteurs, ou une combinaison de lentille(s) et de réflecteur(s).

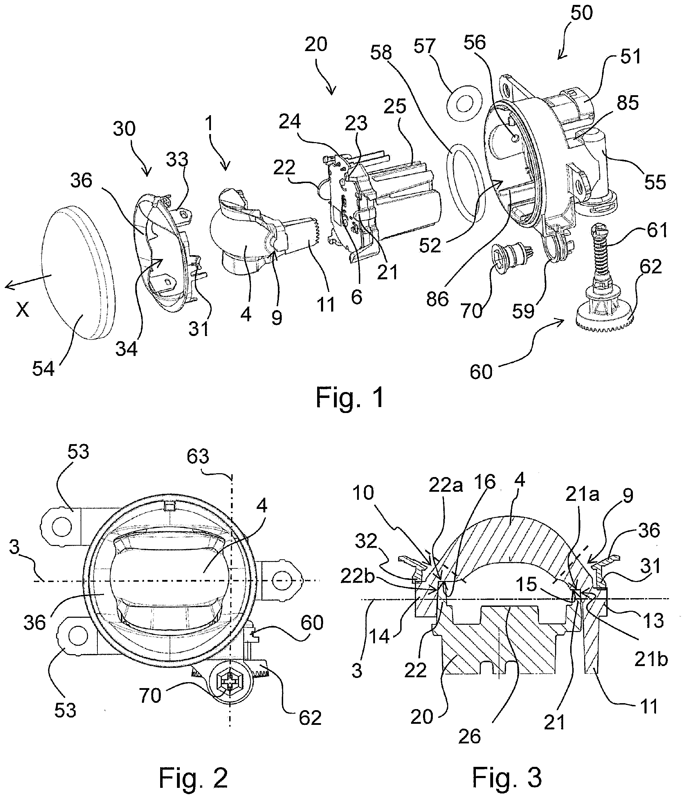

Comme illustré aux figures 1 et 2, le dispositif lumineux comprend un boîtier 50 définissant un logement 52 à l'intérieur duquel sont disposés une source lumineuse 6 et un déviateur optique 1 déviant les rayons émis par cette source lumineuse. De façon classique, le dispositif lumineux peut comprendre une glace de fermeture 54 et une pièce de style ou masque 30, situé entre la glace de fermeture 54 et le déviateur optique 1, selon la direction d'émission X du faisceau lumineux par le dispositif lumineux.

Le boîtier 50 comprend une partie formant une enveloppe sensiblement cylindrique, définissant le logement 52. Le boitier peut comprendre des oreilles de fixation 53 destinées à être fixées au véhicule.

Le dispositif lumineux permet l'émission d'un faisceau lumineux tronqué ou à tout le moins présentant une décroissance très rapide de la luminosité émise en dessous d'un certain niveau, le bord de la partie tronquée ou cette décroissance très rapide correspondant à une ligne de coupure. Par exemple, le faisceau se trouve limité sous un plan, notamment destiné à être sensiblement horizontal et à se trouver à une certaine hauteur au dessus de la chaussée, une fois le dispositif monté dans le véhicule.

Dans l'exemple illustré, le dispositif est un projecteur générant un faisceau antibrouillard, présentant donc une ligne de coupure horizontale; ce projecteur est encore appelé feu antibrouillard ou projecteur antibrouillard.

Ce dispositif est configuré pour autoriser un réglage d'un positionnement de la ligne de coupure du faisceau, selon une direction donnée, notamment destinée à être verticale.

Dans l'exemple illustré le déviateur optique est une lentille 1, présentant une partie de déviation 4, délimitée par un dioptre arrière et un dioptre avant.

A noter que dans la présente demande, les termes « avant » et « arrière » s'entendent par rapport au sens d'émission des rayons lumineux par le dispositif lumineux.

Les dioptres avant et arrière de la partie de déviation 4 sont agencés de manière à réaliser à dévier les rayons lumineux pour former le faisceau lumineux avec la ligne de coupure. Selon un exemple de réalisation non illustré, on peut également avoir des dioptres portant des stries agencées pour dévier les rayons lumineux de manière à former la ligne de coupure.

Le réglage de la position de la ligne de coupure est réalisé par variation du positionnement angulaire de la lentille 1 autour d'un axe de pivotement, dans cet exemple un axe de rotation 3.

Cet axe de rotation 3 est destiné à être orienté selon l'axe transversal du véhicule équipé du dispositif lumineux.

Dans cet exemple, pour permettre ce réglage, la lentille 1 comprend également deux parties d'articulation mobiles 9 et 10 de part et d'autre de la partie de déviation 4, autour desquelles elle peut tourner. Sur la figure 3, ces parties d'articulation mobiles 9 et 10 sont schématiquement séparées de la partie de déviation 4 par les lignes pointillées.

La lentille 1 comprend également une partie dentée 11 coopérant avec une vis de réglage 60, dont la rotation autour de l'axe longitudinal 63 de cette vis entraine le pivotement vers le haut ou vers le bas de la lentille 1.

Ainsi, le réglage de la ligne de coupure s'effectue par un actionnement d'un seul organe, à savoir la lentille 1, servant à la formation et à la transmission du faisceau.

La partie de déviation 4 et les parties d'articulation mobiles 9, 10, sont avantageusement constituées de la même matière, notamment elles sont venues de matière en une seule pièce.

La source lumineuse 6 est dans cet exemple, une diode électroluminescente, placée en amont de la lentille 1 selon le sens d'émission des rayons lumineux.

Le dispositif lumineux comprend un support 20 supportant à la fois cette source lumineuse 6 et la lentille 1. Ce support est fixé directement sur le boitier 50. Il positionne et fixe ainsi directement la source 6 dans le boitier 50 par rapport à la lentille.

La ligne de coupure est ici obtenue par un agencement mutuel de la lentille 1, notamment de ses dioptres avant et arrière, et de la source lumineuse 6, comme cela est connu, notamment des documents EP1762776, en particulier les modes de réalisation correspondant aux figures 11 et suivantes, et/ou EP1970619, en particulier le mode de réalisation de la figure 1.

Selon cet exemple, l'axe de rotation 3 passe sensiblement par la source lumineuse 6. La lentille 1 pourra en outre présenter un foyer au niveau de la source lumineuse 6. On dispose de la sorte d'un faisceau dont la forme et la répartition des intensités lumineuses à l'intérieur de cette forme ne varient pas en fonction du positionnement angulaire de la lentille 1 et donc ne dépendent pas du positionnement de la ligne de coupure.

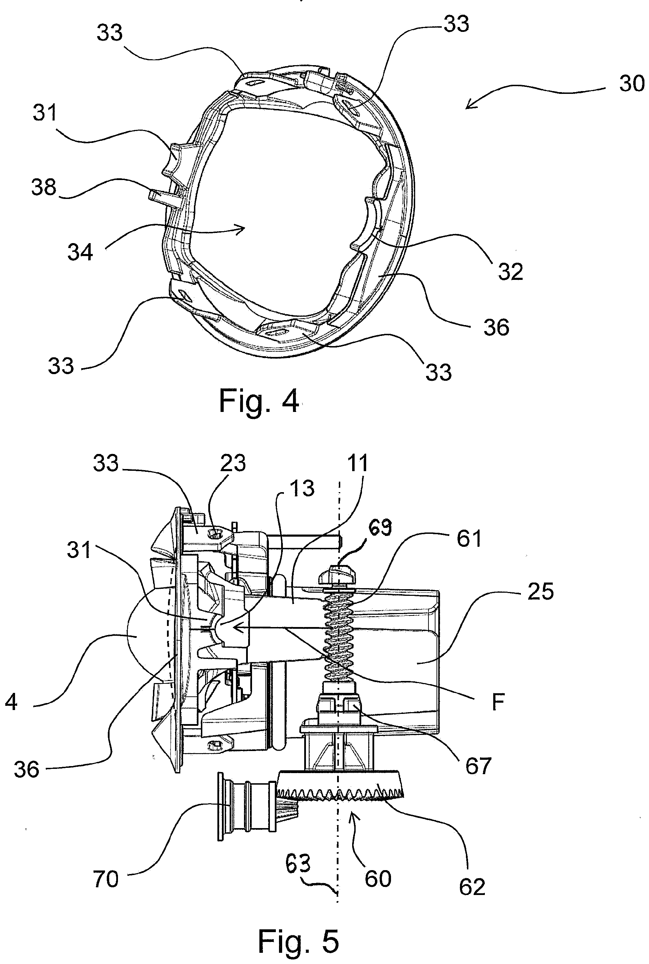

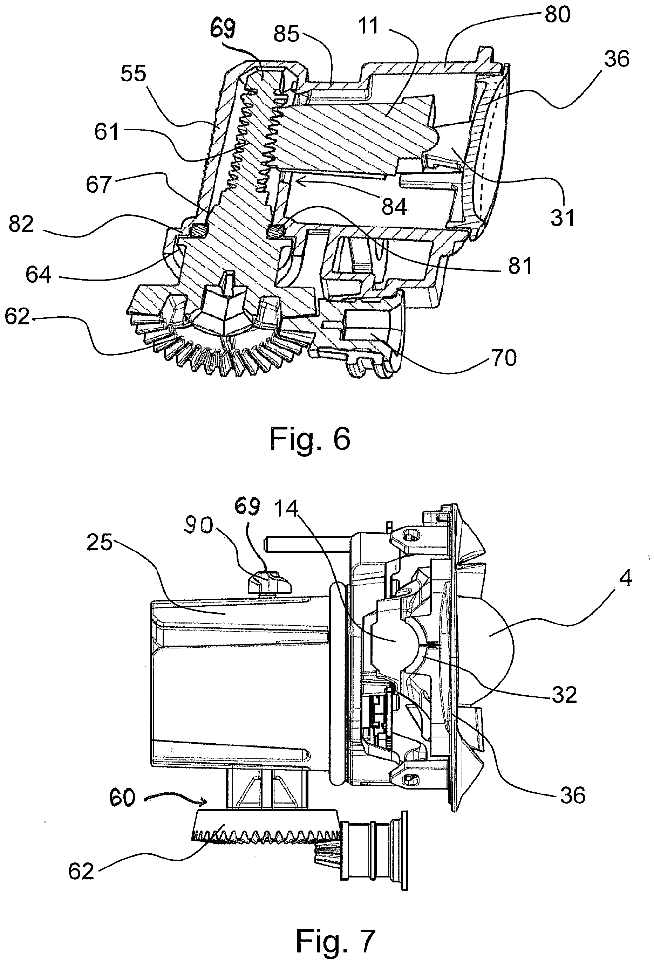

Le masque 30, forme un élément de plaquage. Comme illustré en figure 1, le support 20, la lentille 1 et le masque 30 s'empilent, dans cet ordre, dans le boitier 50. Ce faisant, le masque 30 se fixe sur le support 20 par l'intermédiaire de pattes de fixation 33 munies d'un trou, des crochets 23 du support venant se clipper dans ces trous, comme on peut le voir en figures 5 et 7.

En étant ainsi empilé, le masque 30 plaque la lentille 1 contre son support 20, comme il sera détaillé plus loin.

Le masque 30 présente une ouverture centrale 34. Une fois le projecteur antibrouillard assemblé, le masque 30 entoure la lentille 1, sa partie de déviation 4 se logeant dans l'ouverture centrale 34. De l'extérieur, vu de face, pratiquement seulement cette partie de déviation 4 de la lentille 1 et la face avant du masque 30 sont visibles.

La source lumineuse est dans cet exemple une diode électroluminescente ou LED 6.

Le support 20 comprend ici en outre une carte de commande électronique 24. Cette carte 24 sert, notamment, à contrôler la LED 6. Des bras 21, 22 du support 20 s'étendent de part et d'autre de cette carte de commande 24, selon l'axe de rotation 3.

Le support 20 est dans cet exemple un dissipateur thermique, présentant à l'arrière des ailettes 25. Ce dissipateur thermique 20 est plus particulièrement en relation d'échange thermique avec la LED 6, notamment via la carte électronique 24.

Pour favoriser la dissipation thermique et la compacité du projecteur, la paroi de fond du boitier 50 comprend dans cet exemple une ouverture, non représentée, à travers laquelle passent les ailettes 25. Le projecteur comprend dans ce cas un joint 58, annulaire, afin d'assurer une étanchéité entre le support 20 et la paroi du fond du boîtier 50.

Le dissipateur thermique peut être en métal, notamment en aluminium, ou encore en polymère thermo-conducteur.

Le boitier 50 peut comprendre un dispositif de ventilation, tel qu'un trou de ventilation 56 traversant la paroi latérale du boitier 50 et bouché par une membrane semi-perméable 57. Cela permet de mettre l'intérieur du boitier 50 en communication avec l'extérieur.

La face interne du boîtier 50 peut comprendre des nervures de clippage, à savoir d'emboîtement élastique, pour fixer le support 20 dans le boitier 50 par des moyens complémentaires de ces nervures.

Dans cet exemple, le fond du boitier comprend également un connecteur 51 pour alimenter électriquement la source lumineuse 6.

Le boitier 50 comprend un volume de logement de la lentille 1, du support 20 et du masque 30. Le volume de logement peut, comme ici, être délimité par une paroi cylindrique 80 du boitier 50, sur laquelle est montée la glace de fermeture 54. Le volume de logement est délimité à l'avant par cette glace de fermeture 54 et à l'arrière par une paroi de fond du boitier.

De manière non limitative, ce boitier 50 présente un manchon 85 s'étendant depuis la paroi de fond du boitier et débouchant dans une cassette 55 de logement de la vis de réglage 60. Ce manchon 85 relie ainsi le volume de logement et la cassette 55.

Le boitier 50 présente également une protubérance formant une bague de maintien 59 d'un pignon de renvoi 70, dont l'axe longitudinal est perpendiculaire à celui de la vis de réglage 60. La vis de réglage comprend une roue de réglage 62 dentée dont l'axe de rotation correspond à l'axe longitudinal 63 de la vis de réglage. Le pignon de renvoi 70 coopère avec les dents de la roue de réglage 62, de manière à ce que l'actionnement du pignon entraine la rotation de la roue de réglage 62 et donc de la vis de réglage autour de l'axe longitudinal 63.

Ce masque 30, illustré en détails en figure 4, comprend une armature 36 qui forme l'enjoliveur de ce masque. En effet, comme on peut le voir en figure 2, la partie avant de l'armature 36 forme la partie visible depuis l'extérieur du dispositif lumineux et permet de masquer le fond du boîtier 50.

Dans cet exemple, l'enjoliveur 36 entoure totalement la lentille 1, une fois le dispositif lumineux assemblé.

Dans cet exemple, le masque 30 comprend deux portions de contacts 31 et 32. Celles-ci sont ici formées par des protubérances s'étendant environ selon le sens de l'empilement des éléments à l'intérieur du boîtier 50. Les portions de contact 31, 32, sont tournées vers l'arrière de l'armature 36, de sorte qu'elles ne sont pas visibles depuis l'extérieur. Une fois le dispositif lumineux assemblé la première portion de contact 31 et la deuxième portion de contact 32, viennent en contact avec des portions externes 13 et 12, respectivement de la première partie d'articulation mobile 9 et de la deuxième partie d'articulation mobile 10.

Comme illustré en figures 1 et 3, la portion externe de la première partie d'articulation mobile 9 et la portion externe de la deuxième partie d'articulation mobile 10 sont formées par une première portion cylindrique 13 et une deuxième portion cylindrique 14.

Comme illustré en figure 3, les bras du support 20 sont formés par des portions de disque 21, 22, comprenant chacun une tranche 21a, 22a, chaque tranche étant logée dans des formes complémentaires, à savoir des portions concaves 15, 16 de la lentille 1 situées à l'arrière de celle-ci.

Les portions de contact 31, 32 se terminent par une forme concave complémentaire des portions cylindriques 13, 14.

Ainsi, la première partie d'articulation mobile 9 tourne aisément entre la portion de contact 31 et la portion de disque 21. De même, la deuxième partie d'articulation mobile 10 tourne aisément entre la portion de contact 32 et la portion de disque 22.

Les portions de disque 21, 22 et les portions de contact 31, 32 maintiennent la lentille 1 d'une part sur le support 20, et d'autre part libre en rotation par rapport à ce dernier. Les portions de disque 21, 22 et les portions de contact 31, 32 forment donc ici des parties d'articulation fixes entre lesquelles pivotent les parties d'articulation mobile 9, 10, formant ainsi deux articulations de la lentille.

Dans cet exemple, les portions concaves 15, 16, de la lentille 1 sont situées entre les portions cylindriques 13 et 14, selon l'axe de rotation 3. L'armature 36 plaque ainsi fermement les parties d'articulation mobile 9, 10 contre le support 20.

Ce décalage entre les deux parties d'articulation fixe de chaque articulation, à savoir le décalage selon l'axe de rotation 3 entre la portion cylindrique correspondante 13, 14 et la portion concave correspondante 15, 16, permet de réaliser plus facilement la lentille 1 avec un bras s'étendant vers l'arrière, ce bras formant une portion de secteur denté 11, qui forme ici la partie dentée coopérant avec la vis de réglage 60.

Les portions de disque 21, 22, présentent des faces de contact 21b, 22b, agencées transversalement et à l'opposé de la source lumineuse 6. Elles forment des paliers de contact glissant, coopérant chacune avec une face plane de la partie d'articulation mobile correspondante 9, 10.

Dans cet exemple, ces faces planes et ces faces de contact 21b, 22b sont inclinées vers l'intérieur, à savoir vers l'espace compris entre chaque articulation de la lentille 1. Cela permet un meilleur empilement de la lentille 1 avec son support 20 dans le boitier 50, les parties d'articulation mobiles 9, 10, se plaçant de part et d'autre des portions cylindriques 21 et 22.

Comment illustré sur la figure 3, la LED 6 peut être agencée au niveau de l'axe de rotation 3. Ici, le support 20 comprend un décalage vers l'avant permettant le positionnement de la carte 24, non représentée sur cette figure, et de la LED 6, de manière à ce que l'élément photoémissif de cette dernière passe au niveau de l'axe de rotation 3.

Comme illustré en figure 5 et 7, le masque est clippé sur le support 20 et la portion de contact 31 est en contact avec la partie cylindrique 9, appuyant ainsi sur celle-ci. Le boîtier n'a pas été représenté pour des raisons de clarté du dessin.

Le secteur de roue dentée 11 appuie sur la vis de réglage 60. En particulier, les dents du secteur de roue dentée 11 sont engrenées avec la portion filetée 61 de la vis de réglage 60. De ce fait, selon le sens de rotation de la vis de réglage 60, le secteur de roue dentée 11 bascule vers le haut ou vers le bas, entraînant le réglage de la partie de déviation 4 respectivement vers le bas ou vers le haut.

Ainsi, on assure le déplacement de l'image projetée de la LED 6 et donc du faisceau lumineux correspondant. Notamment, dans le cadre d'un faisceau d'antibrouillard, on peut régler la hauteur de sa ligne de coupure.

Le masque 30 en se plaquant contre la lentille 1 permet non seulement de plaquer celle-ci contre le support 30 mais également de plaquer le secteur de roue dentée 11 contre la vis de réglage 60.

Ainsi dans le mode de réalisation exemplifié sur ces figures, le support 20 ainsi que la vis de réglage 60 forment chacun séparément une portion d'appui au sens de l'invention.

Comment peut l'observer en figure 6, le bras formé par le secteur de roue dentée 11 est agencé entre la portion de contact 31 et la vis de réglage 60, plus particulièrement sa portion dentée 61, selon une direction d'alignement parallèle à celle de la direction X d'émission du faisceau lumineux par le projecteur.

Dans cet exemple, cette direction d'alignement correspond à la direction de flexion de l'enjoliveur 36. L'enjoliveur 36 est donc flexible et déformable, préférentiellement élastiquement déformable sur les côtés du masque 30 selon la direction de flexion F, comme illustré en figure 5, où les pointillés représente la position de flexion maximale de l'enjoliveur 36.

Quand la vis de réglage 60 est actionnée, la lentille 1 pivote jusqu'à une certaine limite, par exemple en butant contre le support 30. Dans un tel cas, le secteur de roue dentée 11 force sur la vis de réglage 60. L'agencement du secteur de roue dentée 11, permet le transfert de cet effort sur la vis de réglage 60 aux portions de contact 31, 32, qui étant rigides, entraînent la déformation de l'enjoliveur 36 selon la direction de flexion F. Ainsi, les dents du secteur de roue dentée 11 se désengagent progressivement de la portion filetée 61, jusqu'à atteindre la position de flexion maximale, au niveau de laquelle les dents du secteur de roue dentée 11 sont complètement désengagées de la portion filetée 61. Il y a alors débrayage de la lentille 1 de la vis de réglage 60.

Aussitôt débrayé, l'élasticité de l'enjoliveur 36 entraîne la lentille 1, et donc le secteur de roue dentée 11, en rappel vers l'arrière, ramenant le secteur de roue dentée 11 en engrènement dans la portion filetée 61.

Le masque 30 peut être monté dans le boîtier 50 de manière à être légèrement précontraint sur la lentille. Ici, l'interférence entre le diamètre le filetage de la portion filetée 61 et du secteur de roue dentée 11 est de 3,5 mm. On pourra donc avoir sur ce projecteur un déplacement de 3 ou 5 mm vers l'avant du secteur de roue dentée 11 avant le débrayage celui-ci.

Par interférence entre deux parties montées ensemble, on entend que ces parties ont été rapprochées davantage qu'elles ne le seraient sans déformation. La distance entre leur position de montage en contact sans déformation et la position montée en déformation correspond à la valeur de l'interférence.

Dans cet exemple, la flexibilité du masque 30 joue également un rôle de rattrapage de jeu au niveau de l'articulation de la lentille 1.

En effet en cas de jeu entre les parties d'articulation mobiles 9, 10, et les portions de disque 21, 22 et les portions de contact 31, 32, la flexibilité du masque 30 permet de rattraper les décalages éventuels.

Selon une réalisation de l'invention et notamment dans cet exemple, le masque 30, la lentille 1 et le support 20 sont montés ensemble de manière à ce que les portions de contacts 31, 32, soient en interférence avec les portions cylindriques 13, 14, de 0,2 mm selon la direction de flexion F. En d'autres termes, une fois monté, l'enjoliveur 36 présente une précontrainte, de sorte qu'il est, par rapport à sa position sans contrainte, fléchit vers l'avant de 0,2 mm à son point de flexion maximale. Cette précontrainte permet de davantage rattraper les jeux.

Dans l'exemple illustré, les portions de contact 31, 32, les portions cylindriques 13, 14, et les portions de disque 21, 22 sont plus petites d'un côté du projecteur, ici du côté de la partie dentée 11, que de l'autre côté du projecteur. Cela permet de réaliser des détrompeurs de manière à positionner le masque 30 dans le bon sens autour de la lentille 1, et également de cette lentille 1 sur ce support 20.

Egalement, comme ici, le masque 30 peut comprendre un pion 38 saillant depuis l'arrière de l'enjoliveur 36 et s'étendant longitudinalement en direction du fond du boitier. Ce pion 38 et le support 20 sont agencés de manière à ce que le pion 38 ne puisse passer à côté du support que si la lentille 1 est placée correctement sur le support 20.

Comme illustré en figure 6, le bras portant le secteur de roue dentée 11 passe au travers du manchon 85 et débouche par une ouverture 84 à l'intérieur de la cassette 55.

La vis de réglage 60 comprend des clips 67 agencés contre des portions complémentaires non présentées sur ces figures, permettant ainsi d'empêcher la vis de réglage 60 de bouger en translation vers le bas. De la même manière, la vis de réglage 60 comprend un palier 64 agencé contre une paroi circulaire 82 du boîtier 50, de manière à empêcher la vis de réglage 60 de se déplacer en translation vers le haut.

Un joint 81 est ici agencé entre les clips 67 et ce pallier 64, de manière à assurer l'étanchéité du boîtier 54 au niveau de l'ouverture permettant de monter la vis de réglage 60. Ce joint 81 peut par exemple être posé préalablement sur la vis de réglage.

Dans cet exemple, un épaulement circulaire permet d'accueillir le joint 81.

Selon une variante de réalisation, la vis de réglage 60 peut comprendre une portion porteuse 69 située d'un côté de la portion filetée 61 selon l'axe longitudinal de la vis de réglage, cette portion porteuse 69 étant munie d'un ou plusieurs moyens élastiques 90 aptes à être comprimés selon une direction transversale à l'axe longitudinal de la vis. Avantageusement, cette portion porteuse 69 peut former l'une des extrémités de la vis de réglage ; par exemple, comme cela est illustré aux figures 1, 5 et 7, les moyens élastiques 90 sont portés par l'extrémité de la vis opposée à l'extrémité comportant la roue de réglage 62. Selon un mode de réalisation, les moyens élastiques 90 sont des lamelles. Par exemple, les lamelles comprennent une base reliée à la portion porteuse 69, cette base étant agencée radialement par rapport à l'axe longitudinal 63 de la vis de réglage 60. Les lamelles présentent une première et une deuxième extrémités, la première extrémité étant la portion de ladite base reliée à la portion porteuse 69, les lamelles d'étendant entre leur dite base et leur dite deuxième extrémité et se courbant depuis leur base vers cette deuxième extrémité dans le même sens. Avantageusement, ces lamelles sont venues de matière en une seule pièce avec la portion porteuse 69. Les lamelles peuvent par exemple être au nombre de trois ; cela permet que, quelle que soit l'orientation de la vis de réglage 60 selon la position conférée à la lentille 1, il y ait toujours au moins une lamelle en compression contre une paroi interne de la cassette 55 formant la portion de coopération 68.

Dans cette variante de réalisation, la vis de réglage 60, le déviateur optique 1 et l'armature 36 sont agencés de manière à ce que la précontrainte de l'armature soit suffisante pour entrainer une précontrainte sur la vis de réglage, de sorte que tout moyen élastique étant à l'arrière de la vis de réglage présente une contrainte supérieure au(x) moyen(s) élastique(s) à l'avant de cette vis de réglage ; ainsi le rattrapage des jeux est essentiellement réalisé par les moyens élastiques 90 de la vis de réglage, la flexibilité de l'armature étant essentiellement mise en œuvre pour absorber les efforts sur le déviateur optique lorsque celui-ci est réglé en bout de course, en particulier pour permettre le débrayage du déviateur optique de la vis de réglage.

Le montage du projecteur peut être réalisé de la façon suivante.

Dans un premier temps :
- on clippe la vis de réglage 60 dans la cassette de réglage 55,
- on monte la lentille 1 sur son support 20 et on clippe le masque 30 sur le support et autour de lentille 1, plaquant ainsi la lentille 1 contre le support 20.

Dans un deuxième temps, on glisse l'ensemble masque/lentille/support dans le boîtier 50, le secteur de roue dentée 11 passant au travers de l'ouverture de la cloison qui sépare le manchon 85 de la cassette 55.

Selon une réalisation de l'invention et comme dans l'exemple illustré, le masque 30 et/ou le support 20, ainsi que le boîtier 50 sont ici agencés de manière à entraîner le positionnement de l'ensemble masque/lentille/support dans le boîtier 50. Notamment, des rails de guidage 84 permettent de guider le glissement du support 20 dans le boîtier 50, de manière à faciliter le passage du secteur de roue dentée 11 au travers de l'ouverture dans la cloison séparant la cassette 55 du manchon 85, et l'engrènement avec la vis de réglage 60.

Ensuite, on peut monter le renvoi d'angle 70 dans la bague de maintien 59, puis fermer le projecteur par la glace de fermeture 54.

Lors du moulage du masque 30, on peut utiliser deux contre-formes démoulant en s'écartant selon une direction correspondant environ à la future direction d'émission X du faisceau lumineux par le projecteur. Ces contre-formes comprennent des creux, ou empreintes, permettant de réaliser les faces de l'enjoliveur 36 et son ouverture centrale 34, ainsi que les portions de contact 31, 32, et les pattes de fixation 33.

Pour réaliser les trous des pattes de fixation 33, on peut utiliser deux tiroirs se retirant pour le démoulage selon une direction différente, notamment perpendiculaire à la direction d'écartement des contre-formes.

La présente invention est particulièrement avantageuse dans le cadre d'un projecteur antibrouillard. Cependant, elle pourrait être appliquée à d'autres dispositifs lumineux.

Par exemple, à des dispositifs lumineux avec une lentille en rotation autour d'un axe vertical pour réaliser une partie mobile d'un faisceau lumineux, notamment un premier faisceau avec une ligne de coupure oblique ou verticale, ce premier faisceau étant destiné à être combiné à un faisceau avec une ligne de coupure horizontale.

Selon une réalisation de l'invention, cette combinaison peut s'appliquer à un dispositif lumineux selon l'invention générant un faisceau lumineux élémentaire avec une coupure oblique ou verticale destiné à être combiné à un deuxième faisceau élémentaire avec la ligne de coupure horizontale. Le faisceau à coupure oblique se déplaçant horizontalement par actionnement du déviateur optique, par exemple en fonction des virages pris par le véhicule équipé du dispositif lumineux ou encore en fonction des véhicules arrivant en sens opposé.

## Revendications

1. Dispositif lumineux de véhicule automobile destiné à comprendre une source lumineuse (6), ledit dispositif lumineux comprenant :
- un déviateur optique (1) agencé pour dévier les rayons lumineux émis par la source lumineuse,
- au moins un élément d'appui (60, 20),
- un élément de plaquage (30) comprenant une armature (36) et au moins une portion de contact (31,32) portée par l'armature, l'armature entourant au moins partiellement le déviateur optique, ladite portion de contact étant en appui contre le déviateur optique,
le déviateur optique, ledit élément d'appui et ledit élément de plaquage étant agencés de manière à ce que le déviateur optique (1) soit au moins partiellement enserré entre ledit élément d'appui (60, 20) et ladite portion de contact (31, 32), et à ce que, selon une direction passant par ladite portion de contact, dite direction de flexion (F), l'armature soit déformable, c'est-à-dire se déforme sans rupture lorsqu'elle subit une force de contrainte selon la direction de flexion, de préférence élastiquement déformable, l'élément de plaquage étant un masque (30) placé en avant de l'élément d'appui (60, 20) selon la direction d'émission (X) du faisceau lumineux par ledit dispositif lumineux, **caractérisé en ce que** ladite portion de contact est rigide, c'est-à-dire ne subit pas de déformation lorsqu'elle est soumise à la même force de contrainte que l'armature déformable et l'armature est un enjoliveur (36) du masque (30), l'enjoliveur étant visible depuis l'extérieur dudit dispositif lumineux et présentant une ouverture centrale (34) à travers laquelle passent les rayons lumineux émis par la source lumineuse (6), après ou avant déviation par le déviateur optique (1) .

2. Dispositif lumineux selon l'une des revendications précédentes, dans lequel l'élément d'appui ou l'un des éléments d'appui est une vis de réglage (60) s'étendant selon un axe longitudinal (63) et agencée de manière à entrainer le pivotement du déviateur optique (1) autour d'un axe de pivotement (3).

3. Dispositif lumineux selon la revendication 2, dans lequel le déviateur optique (1) comprend une partie de déviation (4) destinée à dévier des rayons lumineux émis par la source lumineuse (6) et une partie dentée (11) coopérant avec une portion filetée (61) de la vis de réglage (60).

4. Dispositif lumineux selon la revendication 3, dans lequel la partie dentée (11) est un secteur de roue dentée.

5. Dispositif lumineux selon la revendication 4, dans lequel le secteur de roue dentée (11) forme un bras aligné avec la portion filetée (61) et la portion de contact (31) correspondante.

6. Dispositif lumineux selon l'une des revendications 3 à 5, dans lequel le déviateur optique (1) et la vis de réglage (60) sont agencés de manière à permettre le pivotement du déviateur optique entre deux positions extrêmes, le déviateur optique venant en butée sur une butée de débrayage au moins dans l'une de ces positions extrêmes, et
dans lequel le déviateur optique (1) et la vis de réglage (60) sont agencés de manière à ce que lorsque le déviateur optique appuie contre la butée de débrayage, la portion filetée (61) exerce une poussée sur la partie dentée (11) de sorte que le déviateur optique se déplace selon la direction de flexion (F), entrainant et/ou augmentant le fléchissement de l'armature (36) .

7. Dispositif lumineux selon la revendication 6, dans lequel, l'armature (36) est agencée de manière à pouvoir fléchir jusqu'à ce que la partie dentée (11) débraye de la vis de réglage (60) .

8. Dispositif lumineux selon l'une des revendications précédentes, dans lequel l'armature (36) et la ou les portions de contact (31, 32) sont montées en interférence de manière à ce que l'armature soit en précontrainte élastique selon ladite direction de flexion (F).

9. Dispositif lumineux selon l'une des revendications précédentes, dans lequel l'élément d'appui ou l'un des éléments d'appui est un support (20) du déviateur optique (1).

10. Dispositif lumineux selon la revendication 9, dans lequel le support (20) du déviateur optique (1) est destiné à supporter la source lumineuse (6).

11. Dispositif lumineux selon la revendication 9 ou 10, dans lequel le déviateur optique (1) comprend une partie de déviation (4) des rayons lumineux émis par la source lumineuse (6) et une première partie d'articulation mobile (9) articulée entre une première partie d'articulation fixe (21) et une deuxième partie d'articulation fixe, une première portion de contact (31) formant la deuxième partie d'articulation fixe et le support (20) du déviateur optique comprenant la première partie d'articulation fixe.

12. Dispositif lumineux selon la revendication 11, dans lequel les première et deuxième parties d'articulation fixes (21, 31) sont décalées selon une direction parallèle à l'axe de pivotement (3) du déviateur optique (1), et dans lequel le déviateur optique (1) présente une partie dentée (11) coopérant avec une portion filetée (61) d'une vis de réglage (60), ladite partie dentée étant agencée entre la première partie d'articulation fixe (21) et la deuxième partie d'articulation fixe (31).

13. Dispositif lumineux selon l'une des revendications précédentes, dans lequel l'armature (36) comprend des moyens de fixation à emboitement élastique (33) emboités dans le dispositif lumineux et agencés de manière à maintenir l'armature plaquée contre le déviateur optique (1, et dans lequel l'élément d'appui ou l'un des éléments d'appui est un support du déviateur optique, le support du déviateur optique comprenant des moyens complémentaires d'emboitement avec lesquels les moyens de fixation à emboitement élastique (112) sont emboités.

14. Dispositif lumineux selon l'une des revendications précédentes, ce dispositif lumineux étant un feu antibrouillard, dans lequel le déviateur optique (1) est agencé de manière à réfléchir les rayons lumineux de manière à former un faisceau antibrouillard présentant une ligne de coupure horizontale.

## Patentansprüche

1. Leuchtvorrichtung eines Kraftfahrzeugs, die dazu bestimmt ist, eine Lichtquelle (6) zu enthalten, wobei die Leuchtvorrichtung enthält:
- eine optische Umlenkvorrichtung (1), die eingerichtet ist, um die von der Lichtquelle emittierten Lichtstrahlen umzulenken,
- mindestens ein Auflageelement (60, 20),
- ein Anpresselement (30), das einen Rahmen (36) und mindestens einen vom Rahmen getragenen Kontaktabschnitt (31, 32) enthält, wobei der Rahmen die optische Umlenkvorrichtung zumindest teilweise umgibt, wobei der Kontaktabschnitt gegen die optische Umlenkvorrichtung in Auflage ist,
wobei die optische Umlenkvorrichtung, das Auflageelement und das Anpresselement so eingerichtet sind, dass die optische Umlenkvorrichtung (1) zumindest teilweise zwischen dem Auflageelement (60, 20) und dem Kontaktabschnitt (31, 32) eingespannt ist, und dass der Rahmen gemäß einer durch den Kontaktabschnitt verlaufenden Richtung, Biegerichtung (F) genannt, verformbar ist, d.h. sich ohne Bruch verformt, wenn er eine Beanspruchungskraft gemäß der Biegerichtung erfährt, vorzugsweise elastisch verformbar, wobei das Anpresselement eine Maske (30) ist, die vor dem Auflageelement (60, 20) gemäß der Emissionsrichtung (X) des Lichtbündels der Leuchtvorrichtung angeordnet ist, **dadurch gekennzeichnet, dass** der Kontaktabschnitt starr ist, d.h. dass er keine Verformung erfährt, wenn er der gleichen Beanspruchungskraft wie der verformbare Rahmen ausgesetzt wird, und der Rahmen eine Zierblende (36) der Maske (30) ist, wobei die Zierblende von außerhalb der Leuchtvorrichtung sichtbar ist und eine zentrale Öffnung (34) aufweist, durch die die von der Lichtquelle (6) emittierten Lichtstrahlen vor oder nach der Umlenkung durch die optische Umlenkvorrichtung (1) verlaufen.

2. Leuchtvorrichtung nach dem vorhergehenden Anspruch, wobei das Auflageelement oder eines der Auflageelemente eine Einstellschraube (60) ist, die sich gemäß einer Längsachse (63) erstreckt und so eingerichtet ist, dass sie das Schwenken der optischen Umlenkvorrichtung (1) um eine Schwenkachse (3) bewirkt.

3. Leuchtvorrichtung nach Anspruch 2, wobei die optische Umlenkvorrichtung (1) einen Umlenkteil (4), der dazu bestimmt ist, von der Lichtquelle (6) emittierte Lichtstrahlen umzulenken, und einen gezahnten Teil (11) enthält, der mit einem Gewindeabschnitt (61) der Einstellschraube (60) zusammenwirkt.

4. Leuchtvorrichtung nach Anspruch 3, wobei der gezahnte Teil (11) ein Zahnradsektor ist.

5. Leuchtvorrichtung nach Anspruch 4, wobei der Zahnradsektor (11) einen mit dem Gewindeabschnitt (61) und dem entsprechenden Kontaktabschnitt (31) ausgerichteten Arm formt.

6. Leuchtvorrichtung nach einem der Ansprüche 3 bis 5, wobei die optische Umlenkvorrichtung (1) und die Einstellschraube (60) eingerichtet sind, um das Schwenken der optischen Umlenkvorrichtung zwischen zwei Endstellungen zu erlauben, wobei die optische Umlenkvorrichtung in mindestens einer dieser Endstellungen auf einem Ausrückanschlag in Anschlag kommt, und
wobei die optische Umlenkvorrichtung (1) und die Einstellschraube (60) so eingerichtet sind, dass, wenn die optische Umlenkvorrichtung gegen den Ausrückanschlag anliegt, der Gewindeabschnitt (61) einen Schub auf den gezahnten Teil (11) ausübt, so dass die optische Umlenkvorrichtung sich gemäß der Biegerichtung (F) verschiebt, indem sie die Biegung des Rahmens (36) bewirkt und/oder erhöht.

7. Leuchtvorrichtung nach Anspruch 6, wobei der Rahmen (36) so eingerichtet ist, dass er sich biegen kann, bis der gezahnte Teil (11) von der Einstellschraube (60) ausrückt.

8. Leuchtvorrichtung nach einem der vorhergehenden Ansprüche, wobei der Rahmen (36) und der Kontaktabschnitt oder die Kontaktabschnitte (31, 32) interferierend montiert sind, damit der Rahmen gemäß der Biegerichtung (F) elastisch vorgespannt ist.

9. Leuchtvorrichtung nach einem der vorhergehenden Ansprüche, wobei das Auflageelement oder eines der Auflageelemente ein Träger (20) der optischen Umlenkvorrichtung (1) ist.

10. Leuchtvorrichtung nach Anspruch 9, wobei der Träger (20) der optischen Umlenkvorrichtung (1) dazu bestimmt ist, die Lichtquelle (6) zu tragen.

11. Leuchtvorrichtung nach Anspruch 9 oder 10, wobei die optische Umlenkvorrichtung (1) einen Umlenkteil (4) der von der Lichtquelle (6) emittierten Lichtstrahlen und einen ersten beweglichen Gelenkteil (9) enthält, der zwischen einem ersten ortsfesten Gelenkteil (21) und einem zweiten ortsfesten Gelenkteil angelenkt ist, wobei ein erster Kontaktabschnitt (31) den zweiten ortsfesten Gelenkteil bildet und der Träger (20) der optischen Umlenkvorrichtung den ersten ortsfesten Gelenkteil enthält.

12. Leuchtvorrichtung nach Anspruch 11, wobei die ersten und zweiten ortsfesten Gelenkteile (21, 31) gemäß einer Richtung parallel zur Schwenkachse (3) der optischen Umlenkvorrichtung (1) versetzt sind, und wobei die optische Umlenkvorrichtung (1) einen gezahnten Teil (11) aufweist, der mit einem Gewindeabschnitt (61) einer Einstellschraube (60) zusammenwirkt, wobei der gezahnte Teil zwischen dem ersten ortsfesten Gelenkteil (21) und dem zweiten ortsfesten Gelenkteil (31) eingerichtet ist.

13. Leuchtvorrichtung nach einem der vorhergehenden Ansprüche, wobei der Rahmen (36) Befestigungseinrichtungen mit elastischem Einstecken (33) enthält, die in die Leuchtvorrichtung eingesteckt und so eingerichtet sind, dass sie den Rahmen gegen die optische Umlenkvorrichtung (1) gepresst halten, und wobei das Auflageelement oder eines der Auflageelemente ein Träger der optischen Umlenkvorrichtung ist, wobei der Träger der optischen Umlenkvorrichtung komplementäre Einsteckeinrichtungen enthält, mit denen die Befestigungseinrichtungen mit elastischem Einstecken (112) ineinandergesteckt sind.

14. Leuchtvorrichtung nach einem der vorhergehenden Ansprüche, wobei diese Leuchtvorrichtung ein Nebelscheinwerfer ist, wobei die optische Umlenkvorrichtung (1) so eingerichtet ist, dass sie die Lichtstrahlen so reflektiert, dass ein Nebellichtbündel geformt wird, das eine waagrechte Hell/Dunkelgrenze aufweist.

## Claims

1. Motor vehicle light device intended to comprise a light source (6), said light device comprising:
- an optical deflector (1) arranged to deflect the light rays emitted by the light source,
- at least one bearing element (60, 20),
- a pinning element (30) comprising a bracing element (36) and at least one contact portion (31, 32) borne by the bracing element, the bracing element at least partially surrounding the optical deflector, said contact portion bearing against the optical deflector,
the optical deflector, said bearing element and said pinning element being arranged so that the optical deflector (1) is at least partially gripped between said bearing element (60, 20) and said contact portion (31, 32), and so that, in a direction passing through said contact portion, called direction of flexing (F), the bracing element is deformable, i.e. deforms or bends without breaking under a urging force along the direction of flexing, preferably elastically deformable, the pinning element is a mask (30) placed in front of the bearing element (60, 20) in the direction of emission (X) of the light beam by said light device **characterized in that** said contact portion is rigid, i.e. it does not bear any deformation when the same urging force than the one applied to the deformable bracing element is applied, and the bracing element is a trim (36) of the mask (30), the trim being visible from the outside of said light device and having a central opening (34) through which the light rays emitted by the light source passe (6), after or before deflection by the optical deflector (1).

2. Light device according to the preceding claim, in which the bearing element or one of the bearing elements is an adjusting screw (60) extending along a longitudinal axis (63) and arranged so as to bring about the pivoting of the optical deflector (1) about a pivoting axis (3).

3. Light device according to Claim 2, in which the optical deflector (1) comprises a deflection part (4) intended to deflect light rays emitted by the light source (6) and a toothed part (11) cooperating with a threaded portion (61) of the adjusting screw (60).

4. Light device according to Claim 3, in which the toothed part (11) is a toothed wheel segment.

5. Light device according to Claim 4, in which the toothed wheel segment (11) forms an arm aligned with the threaded portion (61) and the corresponding contact portion (31).

6. Light device according to one of Claims 3 to 5, in which the optical deflector (1) and the adjusting screw (60) are arranged so as to allow the pivoting of the optical deflector between two extreme positions, the optical deflector coming into abutment on a disengaging abutment at least in one of these extreme positions, and in which the optical deflector (1) and the adjusting screw (60) are arranged so that, when the optical deflector bears against the disengaging abutment, the threaded portion (61) exerts a thrust on the toothed part (11) such that the optical deflector is displaced in the direction of flexing (F), bringing about and/or increasing the flexing of the bracing element (36).

7. Light device according to Claim 6, in which the bracing element (36) is arranged so as to be able to flex until the toothed part (11) disengages from the adjusting screw (60).

8. Light device according to one of the preceding claims, in which the bracing element (36) and the contact portion or portions (31, 32) are interference-fitted so that the bracing element is elastically prestressed in said direction of flexing (F).

9. Light device according to one of the preceding claims, in which the bearing element or one of the bearing elements is a support (20) of the optical deflector (1).

10. Light device according to Claim 9, in which the support (20) of the optical deflector (1) is intended to support the light source (6).

11. Light device according to Claim 9 or 10, in which the optical deflector (1) comprises a deflection part (4) of the light rays emitted by the light source (6) and a first mobile articulation part (9) articulated between a first fixed articulation part (21) and a second fixed articulation part, a first contact portion (31) forming the second fixed articulation part and the support (20) of the optical deflector comprising the first fixed articulation part.

12. Light device according to Claim 11, in which the first and second fixed articulation parts (21, 31) are offset in a direction parallel to the pivoting axis (3) of the optical deflector (1), and in which the optical deflector (1) has a toothed part (11) cooperating with a threaded portion (61) of an adjusting screw (60), said toothed part being arranged between the first fixed articulation part (21) and the second fixed articulation part (31).

13. Light device according to one of the preceding claims, in which the bracing element (36) comprises elastic fitting fixing means (33) fitted in the light device and arranged so as to hold the pinned bracing element against the optical deflector (1), and in which the bearing element or one of the bearing elements is a support of the optical deflector, the support of the optical deflector comprising complementary fitting means with which the elastic fitting fixing means (112) are fitted.

14. Light device according to one of the preceding claims, this light device being a foglight, in which the optical deflector (1) is arranged so as to reflect the light rays so as to form a fog beam having a horizontal cutoff line.
